# FASCICULE DE BREVET EUROPEEN

(11) **EP 0 438 333 B1**
(45) Date de publication et mention de la délivrance du brevet: **07.12.1994**
(21) Numéro de dépôt: 91400056.7
(22) Date de dépôt: 11.01.1991
(51) Int. Cl.: F16J 15/34, F16J 15/16

(54) **Garniture d'étanchéité sèche pour pièce tournante et machine tournante comportant une telle garniture**
Dichtung für drehende Teile und Maschine mit einer derartigen Dichtung
Seal for a rotating part and machine having such a seal

(30) Priorité: 18.01.1990 FR 9000562
(43) Date de publication de la demande: 24.07.1991
(73) Titulaire: FRAMATOME, 92400 Courbevoie (FR)
(72) Inventeur: Bolusset, Daniel, F-71200 Le Creusot (FR); Charbonnier, André, F-71200 Le Creusot (FR)
(74) Mandataire: Bourely, Paul

(56) Documents cités:
- DE-C- 947 349
- FR-A- 1 142 283
- FR-A- 1 346 832
- PATENT ABSTRACTS OF JAPAN, vol. 8, no. 26 (M-273)[1463], 3 février 1984;& JP-A-58 184 362 (HITACHI SEISAKUSHO K.K.) 27-10-1983

## Description

La présente invention concerne notamment une garniture d'étanchéité pour pièce tournante et plus spécifiquement une telle garniture du type dit garniture sèche. Une climatisation efficace d'une telle garniture est nécessaire pour la sureté du fonctionnement de nombreuses machines tournantes, notamment pour le maintien d'une étanchéité qui est requise et pour éviter des déformations ou des destructions qui peuvent être provoquées par un échauffement ou un refroidissement excessif de la garniture.

Diverses solutions sont connues pour réaliser une garniture d'étanchéité à la traversée d'une enceinte par un arbre tournant. Un labyrinthe à jeu réduit peut être utilisé pour confiner un gaz non dangereux. Des garnitures à film d'huile ou des garnitures mécaniques peuvent l'être dans le cas de gaz dangereux. La circulation de l'huile sur les anneaux d'étanchéité fixes et mobiles assure alors la climatisation soit en évacuant les calories produites par son cisaillement soit en apportant les calories nécessaires au maintien en température compatible avec un bon fonctionnement.

Un tel mode de climatisation n'est pas possible dans le cas d'une garniture sèche qui est dépourvue d'une telle circulation d'huile.

Une garniture d'étanchéité sèche est connue par le document FR-A-1 142 283. Un corps tournant de cette garniture comporte un circuit de refroidissement. Cette garniture apparaît néanmoins mal adaptée à des conditions sévères d'utilisation, telles qu'une grande vitesse de rotation, une forte pression, et une grande surface de pièces tournantes en contact avec un gaz chaud. Dans de telles conditions la génération de chaleur devient importante et la température à l'intérieur de la garniture atteint une telle valeur qu'elle peut produire la destruction des pièces, et entraîner ainsi une défaillance grave d'une turbo-machine.

Ce risque est particulièrement sensible dans les procédés qui, pour des raisons de sécurité, imposent la présence de trois interfaces d'étanchéité. La garniture comporte trois chambres internes qui se succèdent, à l'intérieur de l'enceinte contenant le gaz à confiner, jusqu'à l'atmosphère.

Les séparations entre l'intérieur de l'enceinte et la première chambre, entre deux chambres successives, et entre la dernière chambre et l'atmosphère sont réalisées chacune à l'aide d'un anneau d'étanchéité tournant coopérant avec un anneau d'étanchéité fixe, souvent appelé "grain fixe".

Dans la chambre intermédiaire on injecte un gaz auxiliaire qui passe, en raison des fuites, dans la première et la troisième chambre de chacune desquelles il est extrait. L'évacuation de la chaleur est faite en partie par les fuites de gaz dans les interfaces d'étanchéités.

Il est à noter toutefois que le gaz extrait de la première chambre est pollué par le gaz à confiner et doit dans certains cas être traité.

Une solution connue pour évacuer les calories d'une telle garniture consiste à augmenter une fuite de gaz à travers cette garniture.

Mais ceci peut s'avérer dangereux car :
- la fuite du gaz à confiner qui permet l'évacuation des calories peut entraîner des problèmes de sécurité d'exploitation,
- un intervalle axial trop grand entre des anneaux d'étanchéité fixes et tournants diminue la raideur axiale du film gazeux qui circule radialement dans cet intervalle. Sous l'effet des diverses sollicitations mécaniques et aérodynamiques, il peut en résulter des contacts intempestifs entre un anneau fixe et un anneau tournant. Or, de tels contacts risquent d'entraîner la perte définitive de l'étanchéité.

Le problème du refroidissement, bien qu'important et souvent rencontré, n'est pas le seul à prendre en compte. En effet dans certaines installations une garniture d'étanchéité est placée dans une ambiance très froide et un gaz chaud est injecté dans l'interface d'étanchéité. Dans ce cas, si la génération de chaleur n'est pas suffisante, il en résulte un refroidissement du gaz qui peut entraîner une formation de liquide (condensation....) et par suite des destructions au niveau de la garniture. Une solution pour éviter le refroidissement du gaz serait d'en augmenter le débit, mais dans ce cas, on retrouverait les inconvénients qui ont été précédemment cités.

La présente invention a notamment pour but de permettre la réalisation simple d'une garniture d'étanchéité sèche pour pièce tournante permettant un fonctionnement plus sûr d'une machine tournante sans créer ou augmenter une fuite de fluide à travers la garniture et sans risque de polluer un fluide auxiliaire par le fluide à confiner.

Dans ces buts, elle a notamment pour objet une garniture d'étanchéité sèche pour pièce tournante, telle que définie dans les revendications 1 à 3 ci-après.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une garniture selon la présente invention en coupe par un plan axial.

La figure 2 représente cette même garniture en coupe par un plan transversal II-II de la figure 1.

La figure 3 représente en coupe axiale une première machine tournante comportant deux telles garnitures.

La figure 4 représente en coupe axiale une deuxième machine tournante comportant deux telles garnitures.

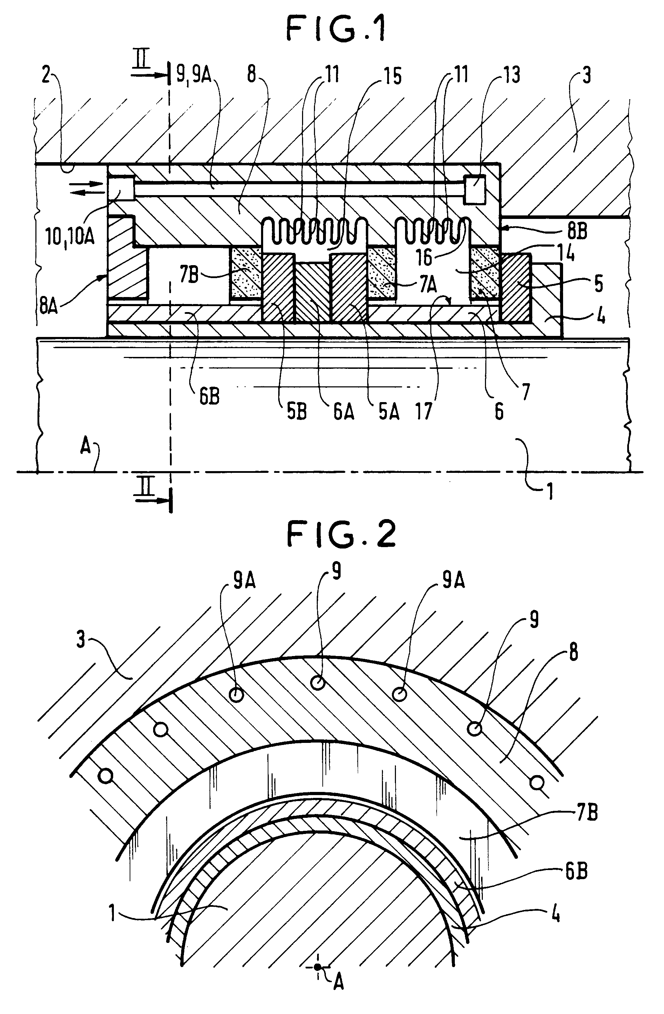

Conformément à la figure 1 une garniture selon la présente invention comporte, de manière générale :
- un sous-ensemble fixe 8, 7 porté par une pièce fixe 3 par rapport à laquelle une pièce tournante 1 tourne autour d'un axe A,
- et un sous-ensemble tournant 4, 5 porté par ladite pièce tournante et coopérant avec ledit sous-ensemble fixe pour empêcher un fluide à confiner de passer entre ces pièces fixes et tournantes. Chacun desdits sous-ensembles fixe ou tournant comporte lui-même, respectivement :
- un corps fixe 8 ou tournant 4 porté par ladite pièce fixe 3 ou tournante 1 en regard dudit corps tournant ou fixe de l'autre dit sous-ensemble,
- et au moins un premier et un deuxième anneaux d'étanchéité fixes 7 et 7A ou tournants 5 et 5A portés coaxialement autour dudit axe A par ledit corps fixe ou tournant. Le sous-ensemble fixe de la garniture donnée en exemple comporte un premier, un deuxième et un troisième anneaux fixes 7, 7A et 7B. Chacun d'eux coopère avec un anneau tournant associé de même rang tels que 5, 5A et 5B appartenant à l'autre dit sous-ensemble. De manière générale de tels anneaux sont disposés pour au moins limiter le passage dudit fluide à confiner tout en formant au moins une chambre intermédiaire 14 qui comporte deux parois principales 16, 17 respectivement formées par les deux dits corps fixe et tournant, et deux parois extrêmes formées l'une 7 par l'un au moins desdits premiers anneaux fixe et tournant, l'autre par l'un 7A au moins desdits deuxièmes anneaux fixe et tournant.

Plus spécifiquement, dans le cas de la garniture donnée en exemple, la pièce tournante est l'arbre 1 d'une machine tournante. Il s'étend selon l'axe de rotation longitudinal A. La pièce fixe est un carter 3, qui fait partie d'une enceinte de cette machine et qui forme un logement 2 pour recevoir la garniture d'étanchéité.

Le corps tournant se compose d'une bague 4 épaulée à l'une des extrémités. Son alésage axial est traversé par l'arbre 1 de la machine ce qui assure à l'ensemble un alignement parfait.

La surface extérieure de cette bague, reçoit les trois anneaux d'étanchéité tournants 5, 5A, 5B qui sont entraînés en rotation au moyen d'un pion ou tout autre élément connu, et maintenus à distance les uns des autres à l'aide de cales d'espacement 6, 6A et 6B. Chaque anneau tournant coopère avec l'anneau d'étanchéité fixe de même rang 7, 7A, ou 7B pour constituer une barrière d'étanchéité pour le gaz à confiner. Une première, une deuxième et une troisième barrières sont ainsi constituées par les anneaux 7 et 5, 7A et 5A, et 7B et 5B. Elles délimitent deux dites chambres intermédiaires 14 et 15. Le sous-ensemble fixe comporte, outre les anneaux fixes 7, 7A et 7B, le corps fixe 8 qui constitue l'enveloppe extérieure de la garniture.

De anière générale, et conformément à la présente invention ledit corps fixe 8 comporte un circuit de climatisation 9, 9A, 13 qui est interne à ce corps et qui permet la circulation d'un fluide de climatisation. Le corps fixe 8 est ainsi climatisé. Il climatise à son tour l'un au moins desdits anneaux d'étanchéité 7, 7A, 7B.

Selon une disposition avantageuse ledit corps fixe climatisé 8 comporte des ailettes de climatisation 11 faisant saillies dans lesdites chambres intermédiaires 14 et 15 à partir de ladite paroi principale 16 formée par ce corps, de manière à climatiser un fluide intérieur contenu dans ces chambres pour que ce fluide climatise à son tour l'un au moins desdits anneaux d'étanchéité 5A, 5B et/ou ledit corps tournant 4.

Le circuit de climatisation interne comporte :
- des canaux aller 9 et retour 9A s'étendant sur une fraction majoritaire de la longueur de ladite garniture,
- des bornes de raccordement aller 10 et retour 10A qui permettent de raccorder ces canaux à un circuit externe de fluide de climatisation et qui sont situées dans une face de raccordement 8A qui est une face longitudinalement extrême dudit corps climatisé,
- et des canaux de raccordement interne 13 pour raccorder lesdits canaux aller auxdits canaux retour au voisinage d'une face longitudinalement extrême 8B de ladite garniture opposée à ladite face de raccordement.

Bien que, sur les figures 1 et 2, trois ensembles d'étanchéité aient été représentés, on comprendra que toutes les configurations de montage peuvent être utilisées, la garniture pouvant, de manière générale, former un ou plusieurs interfaces d'étanchéité.

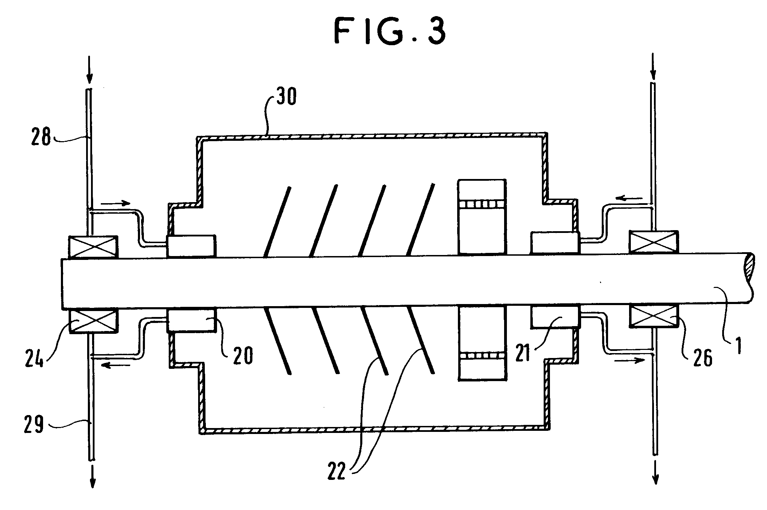

La figure 3 représente une machine tournante selon la présente invention comportant :
- des organes de travail 22 tournant dans une enceinte 30 pour entraîner ou être entraînés par un fluide à confiner dans cette enceinte,
- un arbre tournant 1 s'étendant dans cette enceinte pour porter ces organes de travail, et traversant cette enceinte,
- deux paliers 24 et 26 pour porter cet arbre,
- un circuit de lubrification comportant des tuyaux aller tels que 28 et retour tels que 29 pour lubrifier ces paliers à l'aide d'un fluide de lubrification,
- et deux garnitures sèches 20 et 21 entourant ledit arbre 1 à ses deux traversées de ladite enceinte pour confiner ledit fluide à confiner. Dans cette machine, les garnitures sèches 20 et 21 sont des garnitures du type précédemment décrit, ledit fluide de climatisation étant constitué par ledit fluide de lubrification.

En variante, il pourra être utilisé un fluide de climatisation complètement indépendant provenant d'une source extérieure.

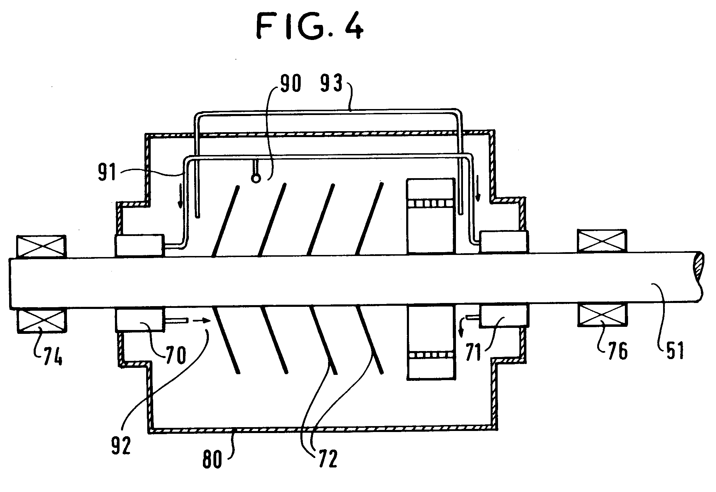

La figure 4 représente une autre machine tournante comportant :
- des organes de travail 72 tournant dans une enceinte 80 pour entraîner ou être entraînés par un fluide à confiner dans cette enceinte, la pression de ce fluide définissant dans cette enceinte des zones de pression relativement haute telles que 90 et des zones de pression relativement basse telles que 92,
- un arbre tournant 51 s'étendant dans cette enceinte pour porter ces organes de travail, et traversant cette enceinte,
- deux paliers 74 et 76 pour porter cet arbre,
- et deux garnitures sèches 70 et 71 entourant ledit arbre à ses deux traversées de ladite enceinte pour confiner ledit fluide à confiner. Dans cette machine, les garnitures sèches 70 et 71 sont des garnitures du type précédemment décrit, ledit fluide de climatisation étant constitué par ledit fluide à confiner. Ledit circuit de climatisation interne audit corps climatisé est alimenté pour cela par un circuit externe d'alimentation de climatisation comportant des tuyaux 91 pour prélever ledit fluide à confiner dans une dite zone à pression relativement haute 90, et des tuyaux 93 pour le restituer dans une dite zone à pression relativement basse 92.

## Revendications

1. Garniture d'étanchéité sèche pour pièce tournante, comportant:
- un sous-ensemble fixe (8, 7) porté par une pièce fixe (3) par rapport à laquelle une pièce tournante (1) tourne autour d'un axe (A),
- et un sous-ensemble tournant (4, 5) porté par ladite pièce tournante et coopérant avec ledit sous-ensemble fixe pour empêcher un fluide à confiner de passer entre ces pièces fixes et tournantes,
- chacun desdits sous-ensembles fixe ou tournant comportant lui-même, respectivement :
- un corps fixe (8) ou tournant (4) porté par ladite pièce fixe (3) ou tournante (1) en regard dudit corps tournant ou fixe de l'autre dit sous-ensemble,
- et au moins un premier et un deuxième anneaux d'étanchéité fixes (7, 7A, 7B) ou tournants (5, 5A, 5B) portés coaxialement autour dudit axe (A) par ledit corps fixe ou tournant pour coopérer avec lesdits premier et deuxième anneaux d'étanchéité tournant ou fixe de l'autre dit sousensemble, de manière à au moins limiter le passage dudit fluide à confiner tout en formant au moins une chambre intermédiaire (14, 15) qui comporte deux parois principales (16, 17) respectivement formées par les deux dits corps fixe et tournant, et deux parois extrêmes formées l'une (7) par l'un au moins desdits anneaux fixe et tournant,
- cette garniture étant caractérisé par le fait que ledit corps fixe (8) comporte un circuit de climatisation (9, 9A, 13) interne à ce corps et permettant la circulation d'un fluide de climatisation pour que ce corps constitue un corps climatisé et climatisant (8) qui climatise à son tour lesdits anneaux d'étanchéité fixes (7, 7A, 7B) et, au moins partiellement, ledit corps tournant (4).

2. Garniture selon la revendication 1, caractérisé par le fait que ledit corps fixe (8) comporte des ailettes de climatisation (11) faisant saillies dans ladite chambre intermédiaire (14) à partir de ladit paroi principale (16) formée par ce corps, de manière à climatiser un fluide intérieur contenu dans cette chambre pour que ce fluide climatise à son tour l'un au moins desdits anneaux d'étanchéité (5A, 5B) et/ou ledit corps tournant (4).

3. Garniture selon la revendication 1, caractérisée par le fait qu'un premier, un deuxième et un troisième dits anneaux d'étanchéité fixes (7, 7A, 7B) et tournants (5, 5A, 5B) se succèdent selon une direction longitudinale qui est celle dudit axe (A) et qui est celle d'une longueur de ladite garniture,
- ledit circuit de climatisation interne comportant des canaux aller (9) et retour (9A) s'étendant sur une fraction majoritaire de la longueur de ladite garniture,
- des bornes de raccordement aller (10) et retour (10A) qui permettent de raccorder ces canaux à un circuit externe de fluide de climatisation et qui sont situées dans une face de raccordement (8A) qui est une face longitudinalement extrême dudit corps fixe (8),
- et des canaux de raccordement interne(13) pour raccorder lesdits canaux aller auxdits canaux retour au voisinage d'une face longitudinalement extrême (8B) opposée à ladite face de racccordement,

4. Machine tournante comportant :
- des organes de travail (22) tournant dans une enceinte (30) pour entraîner ou être entraînés par un fluide à confiner dans cette enceinte,
- un arbre tournant (1) s'étendant dans cette enceinte pour porter ces organes de travail, et traversant cette enceinte,
- au moins un palier (24, 26) pour porter cet arbre,
- un circuit de lubrification comportant des tuyaux aller (28) et retour (29) pour lubrifier ce palier à l'aide d'un fluide de lubrification,
- et au moins une garniture sèche (20, 21) entourant ledit arbre (1) à sa traversée de ladite enceinte pour confiner ledit fluide à confiner,
- cette machine étant caractérisée par le fait que ladite garniture sèche (20) est une garniture selon la revendication 1 ci-dessus, ledit fluide de climatisation étant constitué par ledit fluide de lubrification.

5. Machine tournante comportant :
- des organes de travail (72) tournant dans une enceinte (30) pour entraîner ou être entraînés par un fluide à confiner dans cette enceinte, la pression de ce fluide définissant dans cette enceinte des zones des pression relativement haute (90) et des zones de pression relativement basse (92),
- un arbre tournant (51) s'étendant dans cette enceinte pour porter ces organes de travail, et traversant cette enceinte,
- et au moins une garniture sèche (70, 71) entourant ledit arbre à sa traversée de ladite enceinte pour confiner ledit fluide à confiner, cette machine étant caractérisée par le fait que ladite garniture sèche (70, 71) est une garniture selon la revendication 1 ci-dessus, ledit fluide de climatisation étant constitué par ledit fluide à confiner, ledit circuit de climatisation interne audit corps fixe étant alimenté par un circuit externe d'alimentation de climatisation comportant des tuyaux (91) pour prélever ledit fluide à confiner dans une dite zone à pression relativement haute (90), et des tuyaux (93) pour le restituer dans une dite zone à pression relativement basse (92).

## Claims

1. A dry sealing gasket for a rotary part, the gasket including:
a fixed sub-assembly (8, 7) carried by a fixed part (3) relative to which a rotary part (1) rotates about an axis (A); and
a rotary sub-assembly (4, 5) carried by said rotary part and co-operating with said fixed sub-assembly to prevent a fluid to be confined from passing between the fixed part and the rotary part;
said fixed and rotary sub-assemblies both including respectively:
a body, fixed (8) or rotary (4), carried by the corresponding fixed or rotary part (3 or 1) facing said rotary or fixed body of the other sub-assembly; and
at least first and second sealing rings, fixed (7, 7A, 7B) or rotary (5, 5A, 5B), carried coaxially about said axis (A) by said fixed or rotary body, so as to cooperate with said first and second rotary or fixed sealing rings of the other one of said sub assemblies, so as at least to limit passage of said fluid to be confined, while forming at least one intermediate chamber (14, 15) which includes two main walls (16, 17) respectively formed by said fixed body and by said rotary body, and two end walls, one of which (7) being formed by at least one of said fixed and rotary rings;
said gasket being characterized by the fact that said fixed body (8) includes a temperature-conditioning circuit (9, 9A, 13) which is disposed inside the fixed body, and which enables a temperature-conditioning fluid to circulate, so that the fixed body constitutes a temperature-conditioned and temperature-conditioning body (8) which in turn temperature-conditions said fixed sealing rings (7, 7A, 7B) and, at least in part, said rotary body (4).

2. A gasket according to claim 1, characterized by the fact that said fixed body (8) is provided with temperature-conditioning fins (11) projecting into said intermediate chamber (14) from said main wall (16) formed by the body, so as to temperature-condition an internal fluid contained in the chamber so that the fluid in turn temperature-conditions at least one of said sealing rings (5A, 5B) and/or said rotary body (4).

3. A gasket according to claim 1, characterized by the fact that first, second and third fixed sealing rings (7, 7A, 7B) and first, second and third rotary sealing rings (5, 5A, 5B) succeed one another in a longitudinal direction which is the direction of said axis (A), and which is the direction of a length of said gasket;
said internal temperature-conditioning circuit including:
go channels (9) and return channels (9A) extending over the majority of the length of said gasket;
go connection terminals (10) and return connection terminals (10A) which enable the channels to be connected to an external temperature-conditioning fluid circuit, and which are situated in a connection face (8A), which is a longitudinally end face, of said fixed body (8); and
internal connection channels (13) for connecting said go channels to said return channels in the vicinity of a longitudinally end face (8B) of said gasket that is opposite form said connection face.

4. A rotary machine including:
work members (22) rotatably mounted inside an enclosure (30) for entraining or being entrained by a fluid to be confined in the enclosure;
a rotary shaft (1) carrying the work members, the shaft extending inside the enclosure and passing therethrough;
at least one bearing (24, 26) for carrying the shaft;
a lubrication circuit including go pipes (28) and return pipes (29) for lubricating the bearings with a lubrication fluid; and
at least one dry gasket (20, 21) surrounding said shaft (1) where it passes through said enclosure so as to confine said fluid to be confined;
said machine being characterized by the fact that said dry gasket (20) is a gasket according to claim 1 above, said temperature-conditioning fluid being constituted by said lubrication fluid.

5. A rotary machine including:
work members (72) rotatably mounted inside an enclosure (30) for entraining or being entrained by a fluid to be confined inside the enclosure, the pressure of the fluid defining relatively high pressure zones (90), and relatively low pressure zones (92) in the enclosure;
a rotary shaft (51) for carrying the work members extending inside said enclosure and passing therethrough; and
at least one dry gasket (70, 71) surrounding said shaft where it passes through said enclosure so as to confine said fluid to be confined, the machine being characterized by the fact that said dry gasket (70, 71) is a gasket according to claim 1 above, said temperature-conditioning fluid being constituted by said fluid to be confined, said temperature-conditioning circuit inside said fixed body being fed via an external temperature-conditioning feed circuit including pipes (91) for tapping off said fluid to be confined from one of said relatively high pressure zones (90), and pipes (93) for returning it to one of said relatively low pressure zones (92).

## Patentansprüche

1. Trockendichtung für drehendes Teil, mit:
- einer festen Unteranordnung (8, 7), die durch ein festes Teil (3) getragen wird bezüglich dessen ein drehendes Teil (1) sich um eine Achse (A) dreht,
- und einer drehenden Unteranordnung (4, 5), die von dem drehenden Teil getragen wird und mit der festen Unteranordnung zusammenwirkt, um zu verhindern, daß ein einzuschließendes Fluid zwischen den festen und drehenden Teilen hindurchtritt,
- wobei eine jede der festen und drehenden Unteranordnungen ihrerseits entsprechend aufweist:
- einen festen Körper (8) oder drehenden Körper (4), der von dem festen Teil (3) oder drehenden Teil (1) gegenüber dem drehenden Körper oder festen Körper der anderen Unteranordnung getragen wird,
- und wenigstens einen ersten und einen zweiten festen Dichtungsring (7, 7A, 7B) oder drehenden Dichtungsring (5, 5A, 5B), die koaxial um die Achse (A) durch den festen Körper oder drehenden Körper getragen werden, um mit dem ersten oder zweiten drehenden oder festen Dichtungsring der anderen Unteranordnung zusammenzuwirken, derart, daß der Hindurchtritt des einzuschließenden Fluids begrenzt wird, unter Bildung wenigstens einer Zwischenkammer (14, 15), die zwei Hauptseitenwände (16, 17), die durch die beiden festen bzw. drehenden Körper gebildet werden, aufweist, und zwei Endseitenwände aufweist, von denen eine (7) von wenigstens einem der drehenden und festen Ringe gebildet wird,
- wobei diese Dichtung dadurch gekennzeichnet ist, daß der feste Körper (8) einen inneren Klimatisierungskreis (9, 9A, 13) zu diesem Körper aufweist und das Zirkulieren eines Klimatisierungsfluids ermöglicht, damit der Körper einen klimatisierten und klimatisierenden Körper (8) bildet, der seinerseits die festen Dichtungsringe (7, 7A, 7B) und, wenigstens teilweise, den drehenden Körper (4) klimatisiert.

2. Dichtung nach Anspruch 1, dadurch gekennzeichnet, daß der feste Körper (8) Klimatisierungslaschen (11) aufweist, die in die Zwischenkammer (14) ausgehend von der Hauptseitenwand (16), die von diesem Körper gebildet wird, vorspringen, derart, daß sie ein inneres Fluid klimatisieren, das in dieser Kammer enthalten ist, damit dieses Fluid seinerseits wenigstens einen der Dichtungsringe (5A, 5B) und/oder den drehenden Körper (4) klimatisiert.

3. Dichtung nach Anspruch 1, dadurch gekennzeichnet, daß ein erster, ein zweiter und ein dritter fester Dichtungsring (7, 7A, 7B) und drehender Dichtungsring (5, 5A, 5B) entlang einer Längsrichtung aufeinander folgen, die jene der Achse (A) ist, und die jene einer Länge der Dichtung ist,
- wobei der innere Klimatisierungskreis Einlaufkanäle (9) und Rücklaufkanäle (9A) aufweist, die sich über einen Hauptteil der Länge der Dichtung erstrecken,
- Zuführverbindungsränder (10) und Rückführverbindungsränder (10A) vorgesehen sind, die ermöglichen, diese Kanäle mit einem äußeren Kreis von Klimatisierungsfluid zu verbinden, und die sich in einer Verbindungsseite (8A) befinden, die eine Längsendseite des festen Körpers (8) ist,
- und innere Verbindungskanäle (13) vorgesehen sind, um die Einlaufkanäle mit den Rücklaufkanälen in der Nähe einer Längsendseite (8B) gegenüber der Verbindungsseite zu verbinden.

4. Drehende Maschine mit:
- drehenden Arbeitsorganen (22) in einem Hohlraum (30), zum Antreiben oder Angetrieben werden durch ein in diesem Hohlraum einzuschließendes Fluid,
- einer Drehwelle (1), die sich in dieser Hülle oder diesem Hohlraum erstreckt, um diese Arbeitsorgane zu tragen, und die diesen Hohlraum durchquert,
- wenigstens einem Lager (24, 26), um diese Welle zu tragen,
- einem Schmierungskreis, der Zuführrohe (28) und Rückführrohre (29) aufweist, um dieses Lager mit Hilfe eines Schmierfluids zu schmieren,
- und wenigstens einer Trockendichtung (20, 21), die die Welle (1) an ihrer Durchquerung des Hohlraums umgibt, um das einzuschließende Fluid einzuschließen,
- wobei diese Maschine dadurch gekennzeichnet ist, daß die Trockendichtung (20) eine Dichtung nach Anspruch 1 ist, wobei das Klimatisierungsfluid durch das Schmierfluid gebildet wird.

5. Drehende Maschine mit:
- drehenden Arbeitsorganen (72) in einer Hülle oder einem Hohlraum (30), um durch ein in diesem Hohlraum einzuschließendes Fluid anzutreiben oder angetrieben zu werden, wobei der Druck dieses Fluids in diesem Hohlraum Zonen von relativ hohem Druck (90) und Zonen von relativ niedrigem Druck (92) definiert,
- einer drehenden Welle (51), die sich in diesem Hohlraum erstreckt, um diese Arbeitsorgane zu tragen, und die diesen Hohlraum durchquert,
- und wenigstens einer Trockendichtung (70, 71), die die Welle an ihrer Durchquerung des Hohlraums umgibt, um das einzuschließende Fluid einzuschließen, wobei diese Maschine dadurch gekennzeichnet ist, daß die Trockendichtung (70, 71) eine Dichtung nach Anspruch 1 ist, wobei das Klimatisierungsfluid durch das einzuschließende Fluid gebildet wird, wobei der innere Klimatisierungskreis zu dem festen Körper durch einen äußeren Klimatisierungszuführkreis gespeist wird, der Rohre (91) aufweist, um das einzuschließende Fluid aus einer Zone mit relativ hohem Druck (90) herauszubringen, und Rohre (93) aufweist, um es in die Zone mit relativ niedrigem Druck (92) zurückzuführen.
